# EUROPEAN PATENT APPLICATION

(11) **EP 4 354 685 A1**
(43) Date of publication of application: **17.04.2024**
(21) Application number: 22306563.2
(22) Date of filing: 14.10.2022
(51) Int. Cl.: H02J 3/00, H02J 13/00, G06N 20/00

(54) **PREDICTING FREQUENCY OF A REAL-WORLD ELECTRICAL NETWORK**

(71) Applicant: TotalEnergies OneTech, 92400 Courbevoie (FR)
(72) Inventor: Salmi, Fadia, Paris (FR); Beroni, Pierre, Ivry sur Seine (FR); Fourrier, Alice, NANTERRE (FR); Le Borgne, Emmanuel, CHATILLON (FR)
(74) Representative: Bandpay & Greuter

(57) **Abstract**

The disclosure notably relates to a computer-implemented method for machine-learning one or more functions each configured for respectively predicting frequency of a real-world electrical network at time intervals of a future period of time. The method comprises, for each function, providing a respective dataset with respect to a past period of time. The dataset comprises, for each time interval of the past period of time, a training sample including a historical ground truth value of frequency of the electrical network and one or more features extracted from historical data. The method comprises, for each function, training the function based on the dataset. The method forms an improved solution for predicting frequency of a real-world electrical network.

## Description

### TECHNICAL FIELD

The disclosure relates to the field of computer programs and systems, and more specifically to methods, data structure and device for predicting frequency of a real-world electrical network at time intervals of a future period of time.

### BACKGROUND

The grid balancing of an electrical network consists in maintaining a frequency in the electrical network at an equilibrium frequency (e.g., 50Hz in Europe). The grid balancing prevents a blackout on the electrical network (e.g., power outage). Indeed, the frequency in the electrical network at an equilibrium frequency reflects an equilibrium between production and consumption.

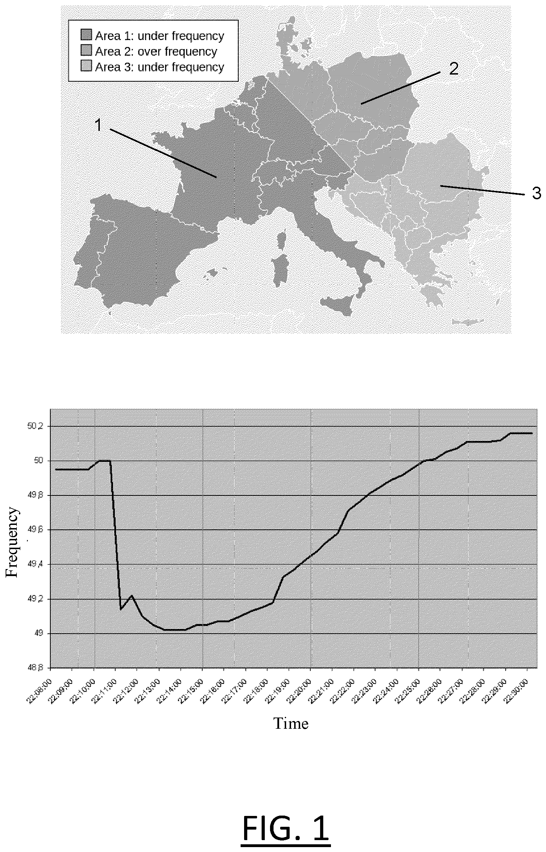

FIG. 1 shows an example of a power outage in Europe that occurred on November 4^{th}, 2006. During this power outage, the network of a part of Europe was divided into three parts according to the map shown in FIG. 1. Zones 1 and 3 had a frequency below the equilibrium frequency while zone 2 had a frequency above the equilibrium frequency. This power outage led to the triggering of a defense plan and deprived 15 million customers across Europe of power for 38 minutes.

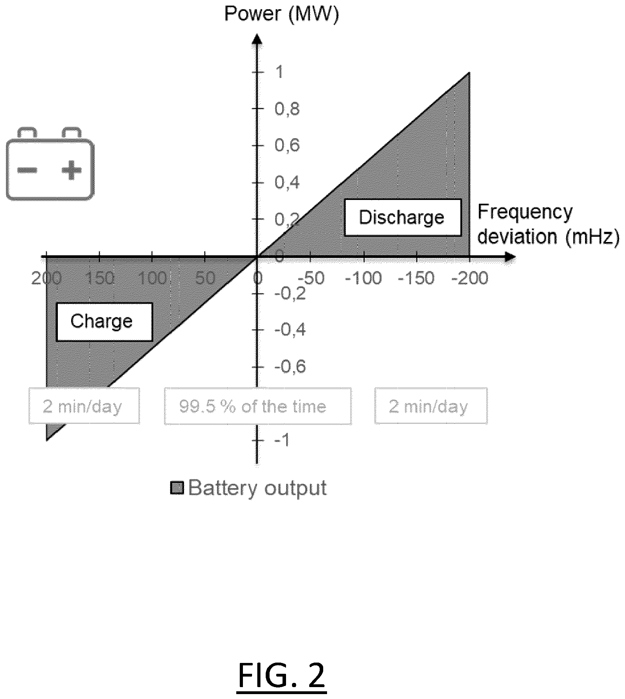

Frequency Containment Reserves (FCR) are in charge of maintaining in real-time the physical equilibrium in the electrical network. The equilibrium is maintained by compensating the difference between electricity consumption and production. One solution used by FCR consists in compensating the difference between electricity consumption and production based on a battery connected to the electrical network to supply electricity to the network and/or store electricity received from the network (by operating the battery as a function of frequency deviations). As illustrated in FIG. 2, the charge and discharge of the battery are used for maintaining the equilibrium (e.g., charge of the battery when the frequency deviation is positive and discharge of the battery otherwise). However, the grid balancing cannot be optimized without predictions about the frequency of the electrical network.

Within this context, there is a need for an improved solution for predicting frequency of a real-world electrical network.

### SUMMARY

It is therefore provided a computer-implemented method for machine-learning one or more functions each configured for respectively predicting frequency of a real-world electrical network at time intervals of a future period of time. This method for machine-learning one or more functions is referred to as "the machine-learning method". The machine-learning method comprises, for each function, providing a respective dataset with respect to a past period of time. The dataset comprises, for each time interval of the past period of time, a training sample including a historical ground truth value of frequency of the electrical network at the time interval of the past period of time, and, one or more features extracted from historical data of the past period of time. The machine-learning method comprises, for each function, training the function based on the dataset.

The machine-learning method may comprise one or more of the following:
- for each function, the duration of each time interval is constant;
- the one or more functions include several functions, each of the one or more functions having a respective duration of time intervals,
- the one or more functions include a first function, a second function and a third function, the duration of time intervals of the first function being equal to 10 seconds, the duration of time intervals of the second function being equal to 1 minute and the duration of time intervals of the third function being equal to 5 minutes;
- for each function, the providing of the respective dataset and the training of the function are repeated daily;
- the training of the function is based on each day of a period of N days until the day before when the providing and the training are performed, the training samples including, for each respective day of the period of N days and for each time interval of the respective day, a respective training sample comprising:
   ∘ the historical ground truth value of frequency of the electrical network on the time interval of the respective day, and
   ∘ one or more features extracted from the historical data of the respective day and of a past day which is two days before the respective day;
- the future period of time is the day after when the providing and the training are performed;
- the prediction of the future period of time is based on :
   ∘ one or more features extracted from the historical data of the day before when the providing and the training are performed, and
   ∘ one or more features which are characteristic of time intervals of the day for which prediction is to be performed;
- each function comprises a classification algorithm configured to take as input the provided dataset and to output, for each time interval of the future period of time, a prediction about whether the frequency is higher or lower than a nominal frequency in the time interval;
- each function further comprises a regression algorithm configured to take as input the predictions outputted by the classification algorithm and features of the provided respective dataset and to output, for each time interval of the future period of time, a prediction about a value of frequency in the time interval;
- the one or more features of each training sample include one or more temporal features, the one or more temporal features optionally including:
   ∘ a month indicator indicating the month of the time interval of the training sample,
   ∘ a day indicator indicating the day of the week of the time interval of the training sample,
   ∘ an hour indicator indicating the hour of the time interval of the training sample,
   ∘ a minute indicator indicating the minute of the time interval of the training sample,
   ∘ a second indicator indicating the second of the time interval of the training sample, and/or
   ∘ a round-hour indicator indicating whether the hour of the time interval of the past period of time is round;
- the one or more features of each training sample include one or more frequency features each characterizing frequency on a previous period with respect to the time interval of the training sample, the one or more frequency features optionally including:
   ∘ one or more shifted frequency indicators each indicating a value of frequency on the previous period,
   ∘ a speed variation indicator indicating a speed variation of the frequency, optionally based on a difference between the frequency indicator of two successive time intervals,
   ∘ one or more threshold indicators each indicating if the frequency is above or below a threshold value of variation with respect to the nominal frequency, if the frequency is above or below the threshold value during a predetermined time and/or how many the frequency is above or below the threshold value,
   ∘ an integral indicator indicating an integral of the frequency compared to the nominal frequency for a period of one hour,
   ∘ a root mean square indicator indicating a root mean square error between the frequency and an equilibrium frequency for a period of one hour, and/or
   ∘ a Nadir indicator indicating a difference of maximum and/or minimum of frequency variation for a period of one hour; and/or
- the historical data further comprises energetic mix production data and real consumption data, the one or more features of each training sample including one or more energy features each characterizing frequency on a previous period with respect to the time interval of the training sample, the one or more energy features optionally including:
   ∘ one or more energetic mix indicators,
   ∘ one or more power ramps indicators,
   ∘ one or more consumption indicators, and/or
   ∘ one or more exchange indicators.

It is further provided a computer-implemented method for predicting frequency of a real-world electrical network at time intervals of a future period of time. This method for predicting frequency is referred to as "the predicting method". The predicting method comprises providing, as input, one or more historical values extracted from a past period of time, and, one or more values which are characteristic of time intervals of the future period of time for which prediction is to be performed. The predicting method further comprises applying, to the input, one or more functions having been machine-learnt according to the machine-learning method, so as to predict frequency of the electrical network at the time intervals of the future period of time.

It is further provided a computer program. The computer program may comprise instructions for performing the machine-learning method. Alternatively or additionally, the computer program may comprise instructions for performing the predicting method.

It is further provided a data structure. The data structure may comprise a function machine-learnt according to the machine-learning method. Alternatively or additionally, the data structure may comprise the computer program.

It is further provided a device comprising a data storage medium having recorded thereon the data structure.

The device may form or serve as a non-transitory computer-readable medium, for example on a SaaS (Software as a service) or another server, or a cloud-based platform, or the like. The device may alternatively comprise a processor coupled to the data storage medium. The device may thus form a computer system in whole or in part (e.g., the device is a subsystem of the overall system). The system may further comprise a graphical user interface coupled to the processor.

### BRIEF DESCRIPTION OF THE DRAWINGS

Non-limiting examples will now be described in reference to the accompanying drawings, where:
- FIG. 1 shows an example of power outage of a real-world electrical network;
- FIG. 2 illustrates an example of the operating of a battery connected to the electrical network;
- FIG.s 3 to 6 illustrate examples of the providing of the dataset;
- FIG. 7 illustrates an example of evolution of frequency during the past period of time and the future period of time;
- FIG.s 8 and 9 illustrate an example of frequency predicted by the executing of the predicting method;
- FIG. 10 illustrates an example of use of the predicted frequency; and
- FIG. 11 shows an example of the system.

### DETAILED DESCRIPTION

It is provided a computer-implemented method for machine-learning one or more functions each configured for respectively predicting frequency of a real-world electrical network at time intervals of a future period of time. This method for machine-learning one or more functions is referred to as "the machine-learning method". The machine-learning method comprises, for each function, providing a respective dataset with respect to a past period of time. The dataset comprises, for each time interval of the past period of time, a training sample including a historical ground truth value of frequency of the electrical network at the time interval of the past period of time, and, one or more features extracted from historical data of the past period of time. The machine-learning method comprises, for each function, training the function based on the dataset.

The machine-learning method forms an improved solution for predicting frequency of a real-world electrical network.

Notably, the machine-learning method allows obtaining one or more functions each trained for predicting frequency of the electrical network. Each of the trained one or more functions is therefore able to predict frequency of the electrical network at time intervals of the future period of time. In addition, the prediction of each function is particularly accurate. Indeed, the training of each function is based on historical ground truth values of frequency of the electrical network and features extracted from historical data of a past period of time. Thus, the training of each function is based on data that have been previously measured and/or acquired (these data are "historical"). Each function is therefore trained to predict the frequency in a way that is relevant to what has been observed in the past period of time.

Moreover, the machine-learning of the one or more functions is carried out automatically by a computer system. This allows for a deterministic and accurate machine-learning of the one or more function, e.g., as opposed to other methods based on estimates and/or approximations. Furthermore, this allows a user, e.g., an engineer working for an FCR, to obtain frequency predictions of the electrical network without tedious efforts: the user provides the historical data and ground truth values of frequency and the computer automatically trains the one or more functions based on them. This makes the machine-learning method ergonomic.

It is also provided a computer-implemented method for predicting frequency of a real-world electrical network at time intervals of a future period of time. This method for predicting frequency is referred to as "the predicting method". The predicting method comprises providing, as input, one or more historical values extracted from a past period of time, and, one or more values which are characteristic of time intervals of the future period of time for which prediction is to be performed. The predicting method further comprises applying, to the input, one or more functions machine-learnt according to the machine-learning method, so as to predict frequency of the electrical network at the time intervals of the future period of time. The machine-learning method may be included in the predicting method. The predicting method may comprise, before applying, to the input, the one or more functions, executing the machine-learning method so as to train the one or more functions. Then, the predicting method may comprise applying, to the input, the trained one or more functions so as to predict frequency of the electrical network at the time intervals of the future period of time. Alternatively, the machine-learning method may have already been executed at the time the predicting method is executed, and the one or more functions applied to the input may thus have already been trained.

The predicting method may be included in an operating process of the electrical network, which may comprise, after the performing of the predicting method, programming one or more operations on the electrical network based on the predicted frequency of the electrical network. For example, the one or more operations may include one or more charge and/or discharge operations of one or more batteries connected to the electrical network. The programming of the one or more charge and/or discharge operations may be such as to optimize frequency of the electrical network (e.g., to avoid and/or reduce the deviation of the frequency from the nominal frequency in the future period of time). The one or more operations may also include one or more electrical energy transfer operations from the electrical network to another electrical network (e.g., the electrical network of a foreign country). The programming of the one or more operations may be such as to optimize cost for one or more balance responsible entities who finance cost the of the differences between electricity injected and withdrawn. The use of the predicted frequency allows reducing this cost through the purchase and/or sale of energy spots. After the programming of the one or more operations, the operating process may then comprise, in the real-world, performing the programmed one or more operations (i.e., the charge(s) and/or discharge(s) of the one or more batteries and/or the electrical energy transfer operation(s)).

The machine-learning method is now discussed in more details.

The machine-learning method may perform the steps of providing of the respective dataset and of training for each of the one or more functions successively. For example, the machine-learning method may perform the providing of the respective dataset for each function, and then, may perform the training of each function. Alternatively, the machine-learning method may perform the steps of providing of the respective dataset and of training successively for each of the one or more functions (i.e., one after another). For example, the one or more functions may comprise a first function and a second function, and the machine-learning method may perform the steps of providing of the respective dataset and of training for the first function, and then, may perform the steps of providing of the respective dataset and of training for the second function. For at least one of the one or more functions, the providing of the respective dataset may be based on the respective dataset already provided for another one of the one or more functions. For example, the providing of the respective dataset for the second function may be based on the respective dataset provided for the first function. For example, the values of the respective dataset of the second function may include values that are mean values of values of the respective dataset of the first function, and the providing of the respective dataset for the second function may comprise computing these mean values of values of the respective dataset of the first function.

The providing of the respective dataset may be performed automatically. For example, the machine-learning method may comprise automatically retrieving historical ground truth values of frequency of the electrical network and historical data during the past period of time (e.g., from a server or an open source data such as a website) and recording these retrieved data (e.g., on a server or a memory). The values of frequency may be the values of frequency at a national or European level (according to the level of the considered electrical network). The machine-learning method may perform the retrieving of these data at a certain frequency during the past period of time (e.g., daily or every 30 minutes), and, after each retrieval, may record the retrieved data with the data already recorded for the period already elapsed. The historical ground truth values of frequency of the electrical network may be real values of frequency published by an operator of the electrical network (e.g., RTE in France, which is the acronym of "Réseau de transport d'électricité", the French for "Electricity Transmission System Operator"). The values of frequency may have been observed/measured by an operator before being published. The value of frequency may have been observed/measured during the time interval (i.e. at a given instant within the time interval). On average, the values of frequency may represent average values of frequency during their respective time interval.

Then, the providing of the respective dataset may comprise forming each training sample of the respective dataset. The number of training samples of the respective dataset may be higher than 1,000 (e.g., higher than 10,000 or 100,000). The training samples may represent a period of 29 successive days. For example, when the duration of time intervals of the function is equal to 5 minutes, the number of training samples may be equal to 8352. When the duration of time intervals of the function is equal to 1 minute, the number of training samples may be equal to 41760. When the duration of time intervals of the function is equal to 10 seconds, the number of training samples may be equal to 250560. The machine-learning method may perform the forming of each of the training samples successively or in parallel. The forming of a training sample may comprise extracting the ground truth value of frequency of the electrical network at the time interval of the training sample (the time interval being the time interval of the training sample) and the one or more features of the training sample from the data retrieved and recorded for the past period of time. The extraction of the one or more features may comprise computing the one or more features based on the retrieved and recorded data (e.g., one of the feature may be an average value and the computing of this feature may comprise computing the average value). The method may comprise computing one or more of the features automatically, e.g. after the retrieving and the recording of the data. Alternatively, the computing of the one or more features may have already been performed (e.g., based on the executing of a method for forming the respective data of each function), and the providing of the respective dataset may comprise retrieving an already computed respective dataset. The method for forming the respective dataset of each function may comprise forming each training sample of each respective dataset (e.g., as already discussed above for the machine-learning method).

In examples, for each function, the duration of each time interval may be constant. In other words, for each function, each time interval of the respective dataset of the function may have the same duration. Each function may have a respective duration of time intervals. The duration of time intervals may be different for each function. For example, the one or more functions may include a first function, a second function and a third function. The duration of time intervals of the first function may be equal to a constant first duration. The duration of time intervals of the second function may equal to a constant second duration and the duration of time intervals of the third function may be equal to a constant third duration. The first duration, the second duration and the third duration may be different. The first duration may be less than the second duration, which in turn may be less than the third duration. The first duration may be higher than 1 second and/or lower than 1 minute (e.g., may be substantially equal to 10 seconds). The second duration may be higher than 10 seconds and/or lower than 5 minutes (e.g., may be substantially equal to 1 minute). The third duration may be higher than 1 minute and/or lower than 10 minutes (e.g., may be substantially equal to 5 minutes).

In examples, for each function, the providing of the respective dataset and the training of the function may be repeated daily. The machine-learning method may update, at each repetition, the past period of time considered for the providing of the respective dataset. The past period of time may behave as a sliding window that includes, at each repetition, a given number of days before when the training is performed (i.e., the method may update the past period of time by one day at each repetition). Similarly, the method may also update the future period (e.g., also by incrementing the future period of time by one day).

For example, the method may comprise encoding the past period of time based on a start date, an end date and/or a duration. For each repetition, the duration of the past period of time may be the same. The method may increment the encoded start date and/or the encoded end date of the past period of time by one day at each repetition. The past period of time may be shifted by one day incrementally at each repetition. Alternatively or additionally, the machine-learning method may update, at each repetition, the future period of time. For example, the future period of time may be the day after the day when the providing and the training are performed, and the future period of time may be shifted by one day incrementally at each repetition. The future period of time may also be a period of more than one day. The method may comprise encoding the future period of time based on a start date, an end date and/or a duration. For each repetition, the duration of future past period of time may be the same. The method may increment the encoded start date and/or the encoded end date of the future period of time by one day at each repetition. The future period of time may be shifted by one day incrementally at each repetition.

The repetition of the providing of the respective dataset and of the training improves the prediction of frequency of the electrical network by the one or more functions. Indeed, it allows considering updated data for the training of the one or more functions. The machine-learning method may consider new data at each iteration (e.g., data that have been observed after that a previous iteration has been performed). The one or more functions are therefore trained based on the last observed data, which improves their relevance and accuracy.

In examples, the training of the function may be based on each day of a period of N days until the day before a day when the providing and the training are performed. The period of N days may be a period of more than 7 days and/or less than 60 days, for example a period of more than 15 days and/or less than 45 days (e.g., the period of N days may be a period of 30 days or 31 days). The machine-learning method may train the function to predict the values of frequency that have been recorded for each day of the period of N days (i.e., for each day, the historical ground truth values of frequency of the electrical network for each time interval of the day). In that case, the training samples may include, for each respective day of the period of N days and for each time interval of the respective day, a respective training sample. The respective training sample may comprise the historical ground truth value of frequency of the electrical network on the time interval of the respective day (the said "respective day" being the day of the period of N days). For each respective day of the period of N days, the machine-learning method may train the function to predict these historical ground truth values of frequency. The respective training sample may further comprise one or more features extracted from the historical data of the respective day and of a past day which is two days before the respective day. For each respective day of the period of N days, the machine-learning method may train the function to predict frequency based on these one or more features. For each function, the training may comprise implementing an optimization algorithm (e.g., a gradient descent algorithm) which minimizes the loss of the function evaluated for each day of the period of N days. The loss may penalize the difference between the prediction of the function and the historical ground truth values of frequency.

In examples, the future period of time may be the day after when the providing and the training are performed. The providing and the training may be performed at a moment of a given day, and the future period of time may be the day after that given day. In the following, the day when the providing and the training are performed is referred to as the "current day" and the day for which the prediction is performed is referred to as the "prediction day". The prediction day may be the day after the current day. In that case, the prediction for the prediction day may be based on one or more features extracted from the historical data of the day before the current day. The prediction of frequency for the prediction day may therefore be based on one or more features extracted from the historical data of the past day (e.g., for each function, the same features than in the respective dataset used for the training of the function), which is the day two days before the prediction day, or which is also the day before the current day (i.e., before the day when the providing and the training are performed). The prediction of frequency for the prediction day may also be based on one or more features which are characteristic of time intervals of the prediction day. The one or more features may include one or more temporal features. More details on the temporal features are given below when the dataset is described.

In examples, each function may comprise a classification algorithm configured to take as input the provided dataset and to output, for each time interval of the future period of time, a prediction about whether the frequency is higher or lower than a nominal frequency in the time interval. The nominal frequency may be a frequency that is expected in the electrical network. The nominal frequency may for example be 50 Hz for the European area or 60 Hz for the United States.

The inputs of the classification algorithm may comprise features which are characteristic of time intervals of the day for which prediction is to be performed. The inputs may also comprise features extracted from the historical data of the day before when the providing and the training are performed. These features may include energetic mix indicators (shifted), power ramp indicators (shifted) and consumption indicators (shifted).

The classification algorithm may be an Xgboost algorithm. The classification algorithm may be configured to perform random search on the features provided as input and to predict if the frequency is higher/lower than 50Hz. The prediction provided by each function may comprise a prediction value for each time interval of 1day, 10sec, lmin or5min in the future period of time. The machine-learning method may train one or more functions having each a respective duration of time interval among these examples of duration (1day, 10sec, lmin or 5min).

The output of the classification algorithm may comprise a vector of values, each value of the vector being associated to a respective time interval of the future period of time. For example, the value of the vector may be "true" when the frequency is higher than the nominal frequency in the time interval associated to the value and "false" otherwise. The machine-learning method may comprise encoding the output of the classification algorithm on the vector of values. The classification algorithm may be a function that weighs features of the provided dataset so that the output separates one class into positive values (e.g., time interval for which the frequency is higher than the nominal frequency) and the other into negative values (e.g., time interval for which the frequency is lower than the nominal frequency).

In examples, each function may further comprise a regression algorithm configured to take as input the predictions outputted by the classification algorithm and features of the provided dataset and to output, for each time interval of the future period of time, a prediction about a value of frequency in the time interval. For example, the machine-learning method may comprise providing as input the vector of values outputted by the classification algorithm. For example, each value of the vector may represent a time interval and may be 0 or 1 depending on whether the frequency has been predicted above or below the nominal frequency by the classification algorithm for the time interval. The features of the provided dataset taken as input by the regression algorithm may include one or more (e.g., all) features from the provided dataset taken as input by the classification algorithm and/or one or more other features (e.g., extracted from the historical data).

The regression algorithm may be an Xgboost algorithm. The regression algorithm may be configured to perform random search on the features and predict the value of the frequency (for time intervals of 1day, 10sec, lmin or 5min). The frequency predicted by the regression algorithm may be under-estimated. The frequency predicted may be under-estimated by forcing the regression to be underestimated based on a regularization. The regularization may be used to avoid overlearning, and also to reduce the weight of each feature significantly. It therefore allows having a forced underestimation.

The respective dataset of each function is now discussed in more details.

The respective dataset includes training samples that each include one or more features. The one or more features of each training sample may include one or more temporal features. Each of the one or more temporal features may characterize the time interval of the training sample (which is one of the time intervals of the past period of time). Each temporal feature may include information about the time interval. Examples of temporal feature that each training sample may include are now given. The one or more temporal features may include a month indicator. The month indication may indicate the month of the time interval (e.g., number between 1 and 12, i.e., representing the month from January to December). The one or more temporal features may include a day indicator. The day indicator may indicate the day of the week of the time interval (e.g., number from 1 to 7 or from 0 to 6). The one or more temporal features may include an hour indicator. The hour indicator may indicate the hour of the time interval (e.g., numberfrom 1 to 24 orfrom 0 to 23, i.e., representing each of the 24 hours of a day). The one or more temporal features may include a minute indicator (e.g., number from 0 to 60, i.e., representing each of the 60 minutes of an hour). The minute indicator may indicate the minute of the time interval. The one or more temporal features may include a second indicator (e.g., number from 0 to 60, i.e., representing each of the 60 seconds of a minute). The second indicator may indicate the second of the time interval. The one or more temporal features may include a round-hour indicator. The round-hour may indicate whether the date of the time interval is a round hour (e.g., a value of 0 or 1 indicating whether the time interval starts at a round hour and/or indicating whether the time interval ends at a round hour, i.e., the value may be 1 for and only for time intervals starting at round hours, or alternatively the value may be 1 for and only for time intervals ending at round hours, or yet alternatively the value may be 1 for and only for time intervals ending at round hours and time intervals starting at round hours).

The one or more features of each training sample may include one or more frequency features. The one or more frequency features may characterize frequency on a previous period with respect to the time interval of the training sample. In other words, the one or more frequency features characterize a period which is shifted with respect to the time interval of the training sample (e.g., a period which is before a given number of days). For example, the time interval of the training sample may be a time interval of a given day, and the one or more frequency features may characterize another day which is two days before the given day (i.e., may be 2-days shifted). Each function may therefore be trained to predict frequency for a given day based on one or more frequency features that are shifted with respect to that given day (i.e., that characterize frequency during another day which is before the given day). The one or more frequency features may for example be 2-days shifted . The 2-days shift improves the prediction. Indeed, the 2-days shift allows using the last available data of the day before the day for which the prediction is performed and to predict the frequency for the next day based on these last available data.

Examples of frequency features that each training sample may include are now given.

The one or more frequency features may include one or more shifted frequency indicators each indicating a value of frequency on the previous period. For example, one or more frequency features may include a one week shifted frequency indicator. The one week shifted frequency indicator may indicate a value of frequency one week before the time interval of the training sample. The value of frequency may be on a corresponding time interval which may correspond to the time interval of the training sample but for a day which is one week before the day of the time interval of the training sample (e.g., for a time interval of the training sample which starts at 14h35min20sec Tuesday, August 2, 2022, the corresponding time interval may be the one which starts also at 14h35min20sec but Tuesday, July 26, 2022). The one or more frequency features may include a 2-days shifted frequency indicator. The 2-days shifted frequency indicator may indicate a value of frequency two days before the time interval of the training sample. The indicated value of frequency may be on a corresponding time interval which may correspond to the time interval of the training sample but for a day which is two days before the day of the time interval of the training sample (the corresponding time interval may correspond to the time interval of the training sample as discussed above for the one week shifted frequency indicator).

The one or more frequency features may include a speed variation indicator indicating a speed variation of the frequency. The speed variation of the frequency may be on the previous period with respect to the time interval of the training sample (e.g., two days before or one week before). The speed variation of the frequency may be based on a difference between the frequency indicator of two successive time intervals (e.g., divided by the duration of each time interval). The two successive time intervals may be a corresponding time interval in the previous period (e.g., two days or one week before as discussed above) and a time interval that follows or precedes the corresponding time interval.

The one or more frequency features may include one or more threshold indicators. Each threshold indicator may indicate if the frequency is above or below a nominal frequency, if the frequency is above or below the nominal frequency during a predetermined time and/or how many the frequency is above or below the nominal frequency. The frequency may be on the previous period (e.g., two days or one week before the time interval of the training sample, e.g., on a corresponding time interval as discussed above for other frequency indicators).

The one or more frequency features may include an integral indicator. The integral indicator may indicate an integral of the frequency compared to the nominal frequency during a period of one hour. The period of one hour may be on a period which is before the time interval of the training sample. For example, the period of one hour may include a corresponding time interval in a day before the day of the time interval of the training sample (e.g., the period of one hour may start before (or at) the corresponding time interval and/or end after (or with) the corresponding time interval). The corresponding time interval may correspond to the time interval of the training sample as discussed above for the one week shifted frequency indicator. The one or more frequency features may include a root mean square indicator. The root mean square indicator may indicate a root mean square error between the frequency and an equilibrium frequency (e.g., 50 Hz) for a period of one hour. The one or more frequency features may include an RMSE indicator. The RMSE indicator may indicate the RMSE (acronym of Root-Mean-Square Error) of the frequency compared to the nominal frequency during one hour. The one or more frequency features may include a Nadir indicator. The Nadir indicator may indicate a difference of maximum and/or minimum of frequency variation during one hour. The period of one hour considered for the root mean square indicator, the RMSE indicator and the Nadir indicator may be the same as the period of one hour considered for the integral indicator.

Each function may be trained to predict frequency on a given day based on temporal feature(s) that each characterize time intervals of the given day and based on frequency feature(s) that each characterize frequency on another day which is before the given day (e.g., which is two days before the given day).

For example, in order to predict the frequency for the time interval starting at 14h35min20sec Thursday, August 4, 2022, each function may use the following features:
∘ temporal feature(s) including:
   - the month indicator having the value "August",
   - a day indicator having the value "Tuesday",
   - an hour indicator having the value "14h",
   - a minute indicator having the value "35min",
   - a second indicator having the value "20sec", and/or
   - a round-hour indicator having the value "false" (14h35min20sec being not a round-hour such as e.g. 14h00min00sec).
∘ frequency feature(s) including:
   - a one week shifted frequency indicator indicating a value of frequency on the time interval starting at 14h35min20sec Thursday, July 28, 2022,
   - a 2-days shifted frequency indicator indicating a value of frequency on the time interval starting at 14h35min20sec Tuesday, August 2, 2022,
   - a speed variation indicator indicating a speed variation of the frequency on the time interval starting at 14h35min20sec Tuesday, August 2, 2022,
   - one or more threshold indicators each indicating if the frequency is above or below a threshold value of variation with respect to the nominal frequency, if the frequency is above or below the threshold value of variation during a predetermined time and/or how many the frequency is above or below the threshold value of variation on the time interval starting at 14h35min20sec Tuesday, August 2, 2022. For example, the threshold value may be 50 mHz (which is the nominal value for 5 minutes at a nominal frequency of 50 Hz) or 75 mHz, or more generally 0.1% or 0.15% of the nominal frequency,
   - an integral indicator indicating an integral of the frequency compared to the nominal frequency for a period of one hour starting at 14h00min00sec Tuesday, August 2, 2022,
   - a root mean square indicator indicating a root mean square error between the frequency and an equilibrium frequency (e.g., 50 Hz) for a period of one hour starting at 14h00min00sec Tuesday, August 2, 2022, and/or
   - a Nadir indicator indicating a difference of maximum and/or minimum of frequency variation for a period of one hour starting at 14h00min00sec Tuesday, August 2, 2022.

In examples, the historical data may further comprise energetic mix production data and real consumption data. In that case, the one or more features of each training sample may include one or more energy features each characterizing frequency on a previous period with respect to the time interval of the training sample (e.g., two days before as discussed above for the frequency features). The one or more energy features may include one or more energetic mix indicators (e.g., characterizing gas, nuclear, hydraulic, solar, wind and/or bioenergy production and all forms of energy production derived from these technologies). The one or more energetic mix indicators may indicate a value of the production for the biogas, a value of the production for the biomass, a value of the production for the total bioenergy, a value of the production for the bioenergy waste, a total physical exchange, a combined-cycle gas turbines, a total gas CHP production, a total gas other production, a total hard coal production, a fossil oil CHP production, a fossil oil CT production, a fossil oil other production, a total fossil oil production, an hydro pumped storage, a total hydro production from run river and poundage, a total hydro production, a total nuclear production, a total pumping production, a total solar production, total wind production, a Carbon Dioxide level. The one or more energy features may include one or more power ramps indicators. Each power ramps indicator may represent a difference between the values of an energetic mix indicator for two consecutive time intervals (e.g., difference of gaz production between two consecutive time intervals). Each power ramps indicator may represent a speed of variation of an energetic mix indicator. The one or more energy features may include one or more consumption indicators. The one or more consumption indicators may indicate a French national electrical consumption, a predicted national consumption one day before. The one or more energy features may include one or more exchange indicators indicating exchanges of energies with a distinct electrical network (e.g., for an electrical network in France, exchange with the electrical network of the United Kingdom, exchange with the electrical network of Spain, exchange with the electrical network of Italy, exchange with the electrical network of Switzerland, exchange with the electrical network of Germany-Belgium).

The one or more energy features may be shared between several training samples (e.g., training samples having consecutive time intervals). For example, the value represented by an energy feature indicator may have been acquired with a frequency that is lower than the frequency defined by the duration of each time interval (e.g., the value may be acquired every 30min and the duration of each time interval may be of 10sec). In that case, the value of the energy feature indicator may be duplicated for each training sample having a time interval in the time between two consecutive acquisitions of the value represented by the energy feature indicator (i.e., each training sample of 10sec in the 30min). For the storage, each training sample of each dataset may be recorded in a memory. In that case, the values of the energy feature indicator that are duplicated for several training samples may therefore be duplicated also in the memory (a same value may be recorded several times for each training sample having the same value). Alternatively, the value of the energy feature indicator may be recorded only once, and each training sample having an energy feature indicator having this value may have a link to this value. The machine-learning method may retrieve such link on the fly during the optimization algorithm implemented by the training.

With reference to FIG.s 3 to 11, examples of implementation of the machine-learning method and the predicting method are now discussed.

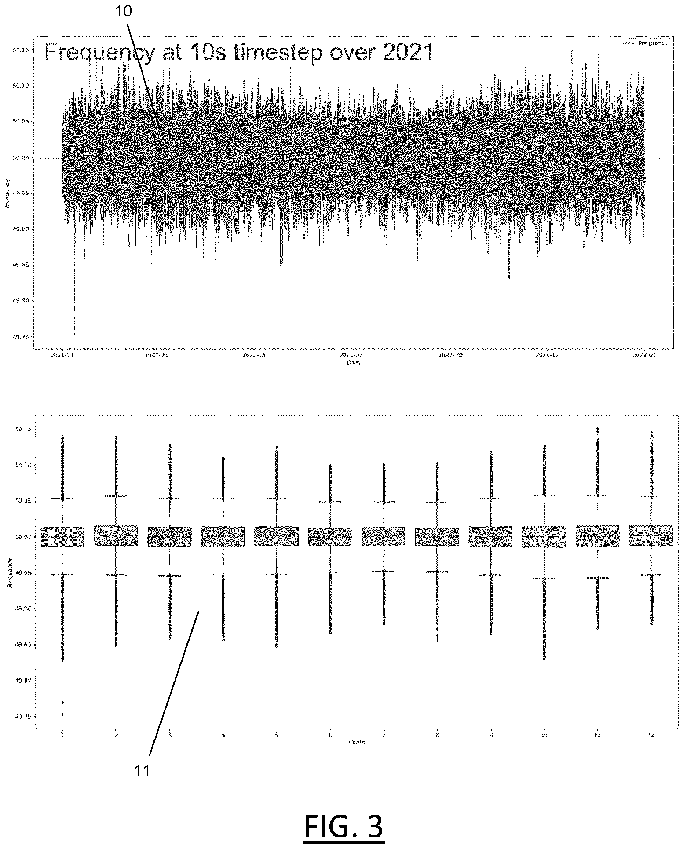

FIG.s 3 to 6 illustrate examples of the providing of the dataset. FIG. 3 shows an evolution of frequency 10 during one year. The frequency is sampled with a frequency at 10sec timestep. The evolution of frequency 10 shows that the frequency variates around 50 Hz, which is the nominal frequency. The volatility of the frequency around this nominal frequency is an expected behavior. The figure also shows the evolution of the variance of the frequency 11 during the year. This evolution of the variance 11 shows the seasonality of the variance: the variance is lower in summer which signifies that the frequency variations are lower during summer. This figure shows the relevance of the month indicator in the temporal features of the dataset used for the training and for the prediction after the training. Indeed, the figure shows that this feature has an impact on the evolution of variance of the frequency, and is therefore relevant for predicting frequency. The month indicator may be included in the one or more features extracted from the historical data of the past period of time, and the providing of the respective dataset comprises, for each training sample, creating the month indicator.

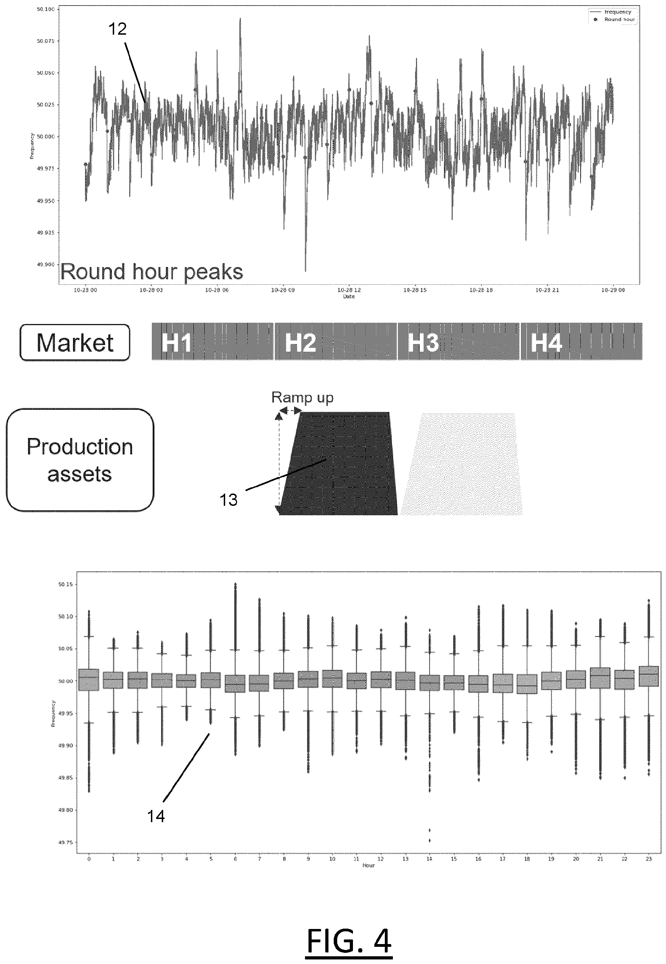

FIG. 4 shows an evolution of frequency as well as round-hour indicators. The evolution shows that, on average, the change in frequency is always significant for round hours (i.e. when the time is round, e.g. at 14:00 or 15:00). The change in frequency may be ascending or descending for these round hours. This evolution may be associated with the start and/or stop of power production that may occur at these round-hours. The start and/or stop of power production may induce the ramp up 13 illustrated in the figure. This illustrates the relevance of taking into account power ramps indicators. The figure also shows the evolution of the variation of frequency 14 for each round-hour. This evolution of the variance 14 shows the seasonality of the variance and therefore the relevance of the round-hour indicator. The hour indicator, the minute indicator, the second indicator, the day of the month indicator, the weekday indicator and/or the round-hour indicator may be included in the temporal features of the one or more features extracted from the historical data of the past period of time. The providing of the respective dataset comprises, for each training sample, creating the temporal features including the hour indicator, the minute indicator, the second indicator, the day of the month indicator, the weekday indicator and the round hour indicator.

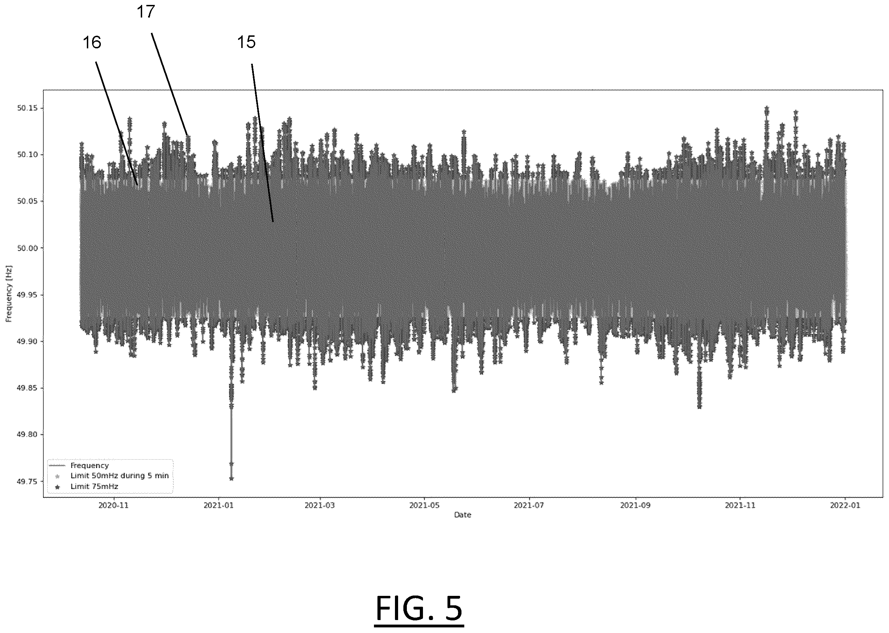

FIG. 5 shows an example of historical data including an evolution of frequency 15 from November 2020 to January 2022. From this evolution 15, the machine-learning method extracts the following features: a speed variation (RoCoF, acronym of "Rate of Change of Frequency"), an absolute 50mHz threshold for at least 5min 16, an absolute 75mHz threshold 17, and integral of the frequency during 1h, an MSD (i.e., the RMSE of the frequency compared to 50Hz) and the Nadir indicator which is a difference of max/min of the frequency variation during one hour.

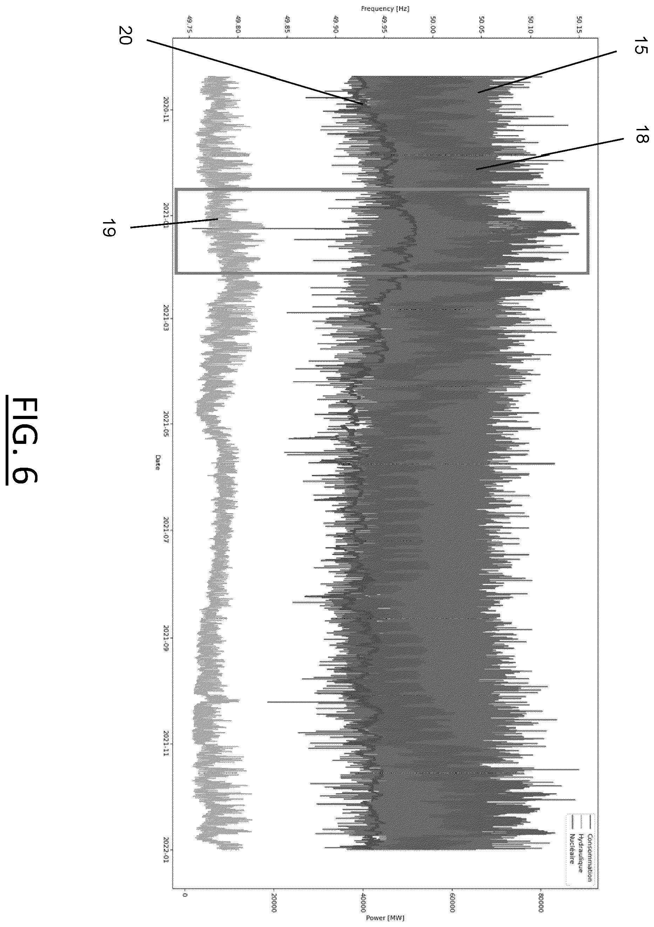

FIG. 6 shows an example of historical data including the evolution of frequency 15 from November 2020 to January 2022, an evolution of consumption 18, an evolution of hydraulic production 19 and an evolution of nuclear production 20. The machine-learning method retrieves these evolutions based on data requests with an API of the operation (the RTE API in this example). The machine-learning method comprises cleaning the data received from the API of the operator and processing the cleaned data for extracting the features of each respective dataset. The figure shows the impact of mix energetic and consumption on frequency and therefore the relevance of the associated features.

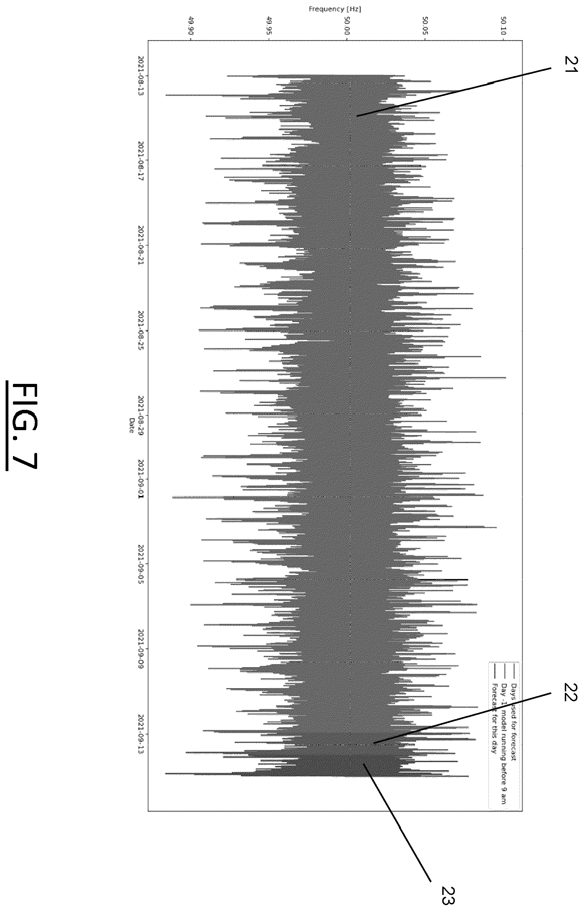

FIG. 7 illustrates an example of evolution of frequency during the past period of time 21 and the future period of time 23. The past period of time 21 is a period of 31 days. When the providing of the respective dataset and the training are repeated daily, the past period of time 21 behaves as a sliding window. It means that the start day of the past period of time 21 is incremented by one day at each repetition. The duration of the past period of time remaining the same for each repetition, the end day of the past period of time 21 is also incremented by one day at each repetition. In each given day of the past period of time 21, each function is trained to predict frequency in the day following the given day based on features extracted from the day before the given day (and also based on temporal features extracted from the given day). The figure also shows the day 22 in which the providing of the dataset and the training are performed. The day 22 is the day following the end day of the past period of time 21. In other words, the past period of time 21 considered at each iteration is a period of N day that is elapsed at the time the providing and the training are performed. This allows the training to be performed based on historical data (i.e., data acquired prior to the performing of the training). The training is therefore performed based on real data, which guarantees the relevance/accuracy of each trained function. The figure also shows the future period of time 23 for which each function is configured for predicting frequency. In this example, the future period of time 23 is the day following the day 22 in which the providing of the dataset and the training are performed. Because, each function is trained to predict frequency in the following day based on features extracted from the previous day, each function is configured to predict frequency in the day 23 based on the last day of the past period of time 21 (and also based on temporal features of the day 23).

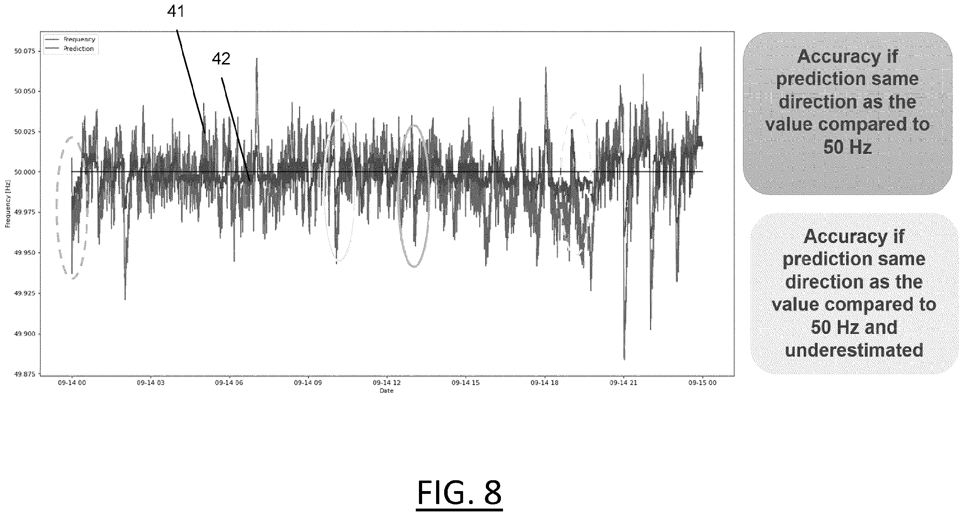

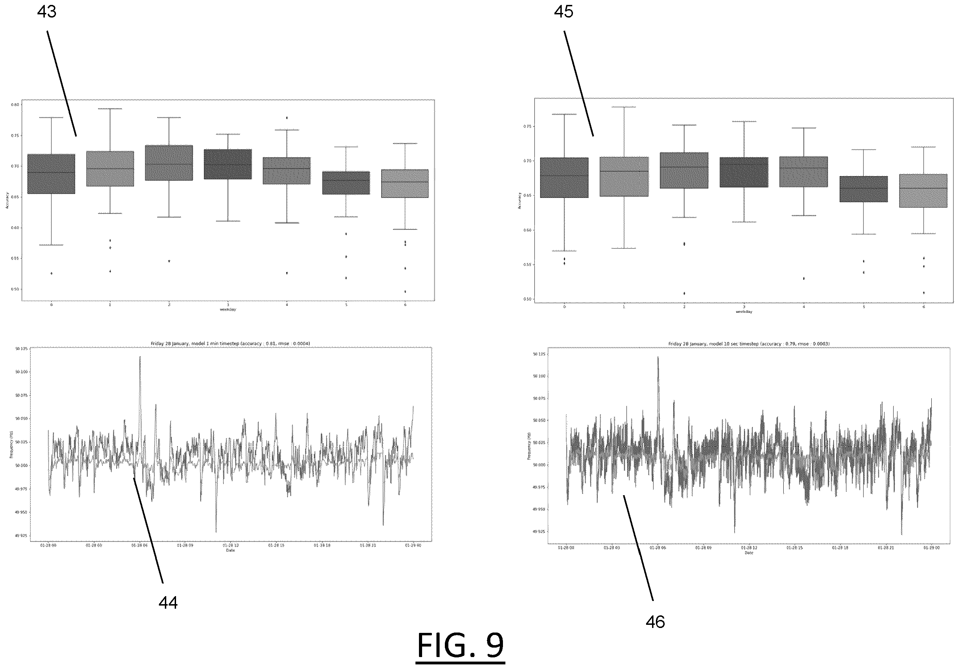

FIG.s 8 and 9 illustrate an example of frequency predicted by the executing of the predicting method. In this example, three functions having respectively duration of time intervals of 10sec, lmin and 5mins are trained and the results of each functions are compared. FIG. 8 shows the evolution of the measured frequency 41 as well as the evolution of the frequency predicted by one of the three functions 42. The prediction is accurate in that it captures trends in frequency change (increase or decrease in frequency). An accuracy criterion is defined for assessing the accuracy of the different functions. The accuracy criterion is high if the prediction has same direction as the value compared to 50 Hz and if the prediction has same direction as the value compared to 50 Hz and underestimated. FIG. 9 shows the evolutions 44 of the measured frequency and the frequency predicted by the functions having a duration of lmin and the accuracy 43 computed with the accuracy criterion for each day of the week. The same evolutions 46 and accuracy 45 are also showed for the functions having a duration of 10sec.

Table 1 summarizes the results obtained for each of the three functions. The results show that the accuracy is higher than 67% for each of the three functions.

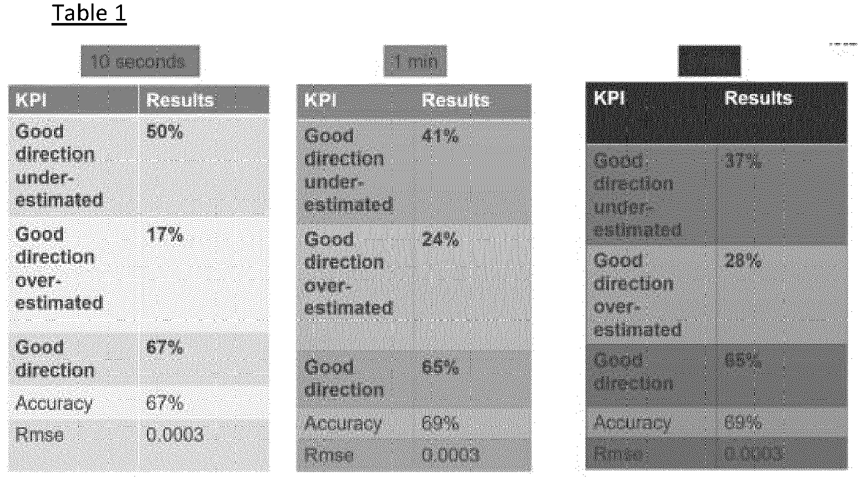

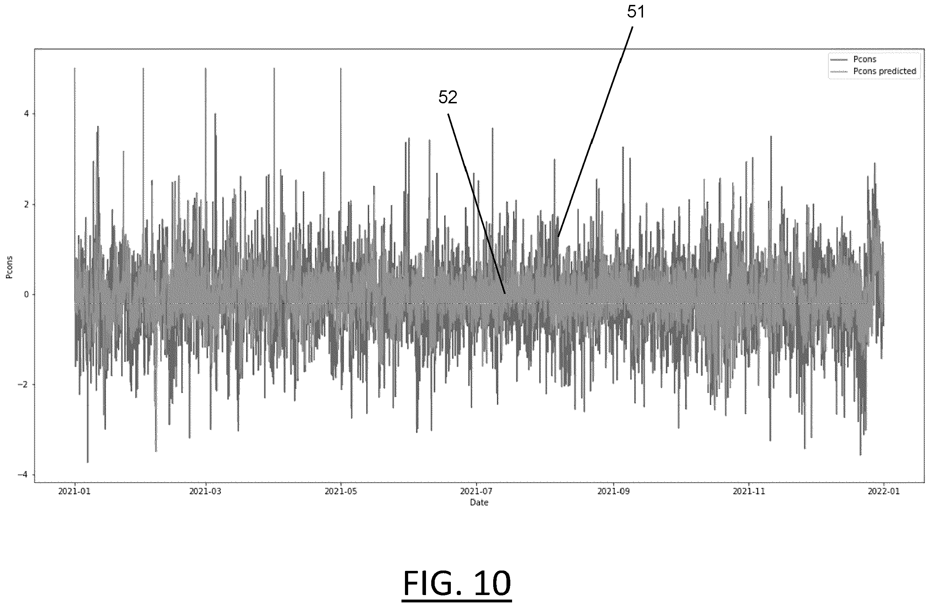

FIG. 10 illustrates an example of use of the predicted frequency. In this example, the predicted frequency is used to compute a predicted power ("P cons") for 15min. The computing of the predicted power comprises studying frequency variations and modeling these frequency variations for computing injection/withdrawal of energy in the electrical network (e.g., with a time step of 10sec, lmin or 5min). The computing of the predicted power may be based on an algorithm that automatically computes the power "P cons" based on frequency variations of the predicted frequency. The figure illustrates the evolution of the measured power 51 as well as the evolution of the predicted power 52. The results shows the accuracy of the predicted power.

The machine-learning method and the predicting method are computer-implemented. This means that steps (or substantially all the steps) of each method are executed by at least one computer, or any system alike. Thus, steps of each method are performed by the computer, possibly fully automatically, or, semiautomatically. In examples, the triggering of at least some of the steps of each method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of the machine-learning method or the predicting method is to perform the machine-learning method or the predicting method with a system adapted for this purpose. The system may comprise a processor coupled to a memory and a graphical user interface (GUI), the memory having recorded thereon a computer program comprising instructions for performing the the machine-learning method and/or the predicting method. The memory may also store a database. The memory is any hardware adapted for such storage, possibly comprising several physical distinct parts (e.g., one for the program, and possibly one for the database).

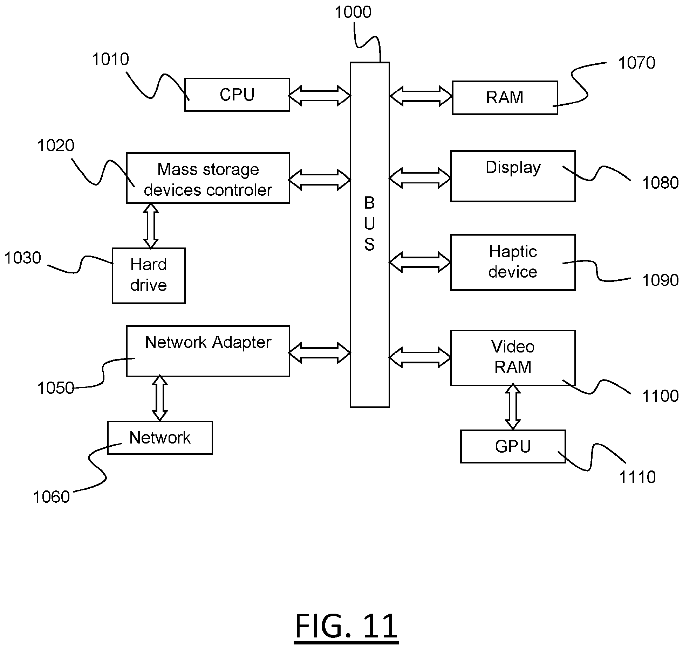

FIG. 11 shows an example of the system, wherein the system is a client computer system, e.g., a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard, or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the machine-learning method and/or the predicting method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. The steps of the machine-learning method and/or the predicting method may be performed by a programmable processor executing a program of instructions to perform functions of the machine-learning method and/or the predicting method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the machine-learning method and/or the predicting method. The computer program may alternatively be stored and executed on a server of a cloud computing environment, the server being in communication across a network with one or more clients. In such a case a processing unit executes the instructions comprised by the program, thereby causing the machine-learning method and/orthe predicting method to be performed on the cloud computing environment.

## Claims

1. A computer-implemented method for machine-learning one or more functions each configured for respectively predicting frequency of a real-world electrical network at time intervals of a future period of time, the method comprising, for each function:
- providing a respective dataset with respect to a past period of time, the dataset comprising, for each time interval of the past period of time, a training sample including:
∘ a historical ground truth value of frequency of the electrical network at the time interval of the past period of time, and
∘ one or more features extracted from historical data of the past period of time; and
- training the function based on the dataset.

2. The machine-learning method of claim 1, wherein, for each function, the duration of each time interval is constant.

3. The machine-learning method of claim 1 or 2, wherein the one or more functions include several functions, each of the one or more functions having a respective duration of time intervals,
wherein optionally the one or more functions include a first function, a second function and a third function, the duration of time intervals of the first function being equal to 10 seconds, the duration of time intervals of the second function being equal to 1 minute and the duration of time intervals of the third function being equal to 5 minutes.

4. The machine-learning method of any one of claims 1 to 3, wherein, for each function, the providing of the respective dataset and the training of the function are repeated daily.

5. The machine-learning method of any one of claims 1 to 4, wherein the training of the function is based on each day of a period of N days until the day before when the providing and the training are performed, the training samples including, for each respective day of the period of N days and for each time interval of the respective day, a respective training sample comprising:
- the historical ground truth value of frequency of the electrical network on the time interval of the respective day, and
- one or more features extracted from the historical data of the respective day and of a past day which is two days before the respective day.

6. The machine-learning method of any one of claims 1 to 5, wherein the future period of time is the day after when the providing and the training are performed, wherein optionally the prediction of the future period of time is based on :
- one or more features extracted from the historical data of the day before when the providing and the training are performed, and
- one or more features which are characteristic of time intervals of the day for which prediction is to be performed.

7. The machine-learning method of any one of claims 1 to 6, wherein each function comprises a classification algorithm configured to take as input the provided dataset and to output, for each time interval of the future period of time, a prediction about whether the frequency is higher or lower than a nominal frequency in the time interval.

8. The machine-learning method of claim 7, wherein each function further comprises a regression algorithm configured to take as input the predictions outputted by the classification algorithm and features of the provided respective dataset and to output, for each time interval of the future period of time, a prediction about a value of frequency in the time interval.

9. The machine-learning method of any one of claims 1 to 8, wherein the one or more features of each training sample include one or more temporal features, the one or more temporal features optionally including:
• a month indicator indicating the month of the time interval of the training sample,
• a day indicator indicating the day of the week of the time interval of the training sample,
• an hour indicator indicating the hour of the time interval of the training sample,
• a minute indicator indicating the minute of the time interval of the training sample,
• a second indicator indicating the second of the time interval of the training sample, and/or
• a round-hour indicator indicating whether the hour of the time interval of the past period of time is round.

10. The machine-learning method of any one of claims 1 to 9, wherein the one or more features of each training sample include one or more frequency features each characterizing frequency on a previous period with respect to the time interval of the training sample, the one or more frequency features optionally including:
• one or more shifted frequency indicators each indicating a value of frequency on the previous period,
• a speed variation indicator indicating a speed variation of the frequency, optionally based on a difference between the frequency indicator of two successive time intervals,
• one or more threshold indicators each indicating if the frequency is above or below a threshold value of variation with respect to the nominal frequency, if the frequency is above or below the threshold value during a predetermined time and/or how many the frequency is above or below the threshold value,
• an integral indicator indicating an integral of the frequency compared to the nominal frequency for a period of one hour,
• a root mean square indicator indicating a root mean square error between the frequency and an equilibrium frequency for a period of one hour, and/or
• a Nadir indicator indicating a difference of maximum and/or minimum of frequency variation for a period of one hour.

11. The machine-learning method of any one of claims 1 to 10, wherein the historical data further comprises energetic mix production data and real consumption data, the one or more features of each training sample including one or more energy features each characterizing frequency on a previous period with respect to the time interval of the training sample, the one or more energy features optionally including:
• one or more energetic mix indicators,
• one or more power ramps indicators,
• one or more consumption indicators, and/or
• one or more exchange indicators.

12. A computer-implemented method for predicting frequency of a real-world electrical network at time intervals of a future period of time, the method comprising:
- providing, as input:
∘ one or more features extracted from a past period of time; and
∘ one or more features which are characteristic of time intervals of the future period of time for which prediction is to be performed; and
- applying, to the input, one or more functions machine-learnt according to the machine-learning method of any one of claims 1 to 11, so as to predict frequency of the electrical network at the time intervals of the future period of time.

13. A data structure comprising a function machine-learnt according to any one of claims 1 to 11, a computer program comprising instructions for performing the machine-learning method of any one of claims 1 to 11, and/or a computer program comprising instructions for performing the predicting method of claim 12.

14. A device comprising a data storage medium having recorded thereon the data structure of claim 13.

15. The device of claim 14, wherein the device further comprises a processor coupled to the data storage medium.
